# EUROPÄISCHE PATENTSCHRIFT

(11) **EP 0 407 637 B1**
(45) Veröffentlichungstag und Bekanntmachung des Hinweises auf die Patenterteilung: **28.09.1994**
(21) Anmeldenummer: 89112762.3
(22) Anmeldetag: 12.07.1989
(51) Int. Cl.: D06F 71/38, D06F 95/00, B65G 47/61

(54) **Vorrichtung zum Bügeln von an Kleiderbügeln hängenden Kleidungsstücken, insbes. Sakkos**
Apparatus for pressing garments on clothes hangers, especially jackets
Dispositif pour presser des pièces de vêtement suspendues à des cintres, en particulier des vestons

(43) Veröffentlichungstag der Anmeldung: 16.01.1991
(73) Patentinhaber: BRISAY Maschinen-GmbH, D-63741 Aschaffenburg (DE)
(72) Erfinder: Sayer, Gerhard, D-6967 Buchen-Bödigheim (DE)
(74) Vertreter: Fincke, Karl Theodor, Dipl.-Phys. Dr.

(56) Entgegenhaltungen:
- DE-A- 2 119 843
- DE-A- 3 733 715
- DE-A- 3 800 911
- GB-A- 1 471 684
- US-A- 4 022 338

## Beschreibung

Die Erfindung betrifft eine Vorrichtung zum Bügeln von an Kleiderbügeln hängenden Kleidungsstücken, insbesondere Sakkos.

Es ist bekannt, zum Bügeln Sakkos von den Kleiderbügeln, an denen sie hängen, abzunehmen, anschließend in einer Vorderteilmaschine links und rechts zu bügeln, dann wieder auf die Kleiderbügel zu hängen, erneut abzunehmen und in einer Rücken- und Seitenteilmaschine fertigzubügeln.

Aufgabe der Erfindung ist es, diese Bügelvorgänge durch einen selbsttätigen Transport zwischen den einzelnen Bügelmaschinen zu rationalisieren.

Die Lösung dieser Aufgabe ist in Anspruch 1 angegeben.

Die Anzahl der Bügelstationen in der erfindungsgemäßen Vorrichtung ist grundsätzlich beliebig groß. Es müssen nur wenigstens zwei Bügelstationen vorgesehen sein.

In die Vorrichtung werden die Kleidungsstücke, insbesondere die Sakkos, an ihren Kleiderbügeln hängend eingeführt und, nachdem sie die einzelnen Bügelstationen durchlaufen haben, an ihren Kleiderbügeln hängend abgenommen.

Um die Bügelform-Oberplatte ohne Schwierigkeit an die Bügelform-Unterplatte heranbringen und wieder von ihr fortbringen zu können, ist bevorzugt eine Ausbildung nach Anspruch 2 vorgesehen.

Zum Ergreifen eines Bügels eignet sich bevorzugt ein Greifer in der Ausbildung nach Anspruch 3.

Um ein Kleidungsstück in Vertikalrichtung einerseits gegenüber de Bügelform-Unterplatte ausrichten zu können und von der Bügelform-Unterplatte nach oben abführen zu können, ist bevorzugt eine Ausbildung nach Anspruch 4 vorgesehen.

Eine allen Anforderungen genügende Ausrichtung des Kleidungsstücks gegenüber der Bügelform-Unterplatte ist durch die Ausbildung nach Anspruch 5 gegeben.

Eine konstruktiv besonders einfache Art der Überführung eines an einem Kleiderbügel hängenden Kleidungsstücks von der Bügelstation zur Überführungsbahn ergibt sich durch die Ausbildung entsprechend Anspruch 6.

Um zu verhindern, daß ein Kleiderbügel nicht vorzeitig von der Stange nach Anspruch 6 rutscht, ist bevorzugt eine Ausbildung nach Anspruch 7 vorgesehen.

Eine selbsttätige Überführung der an den Kleiderbügeln hängenden Kleidungsstücke erhält man bevorzugt durch die Ausbildung nach Anspruch 8.

Um die Zuführung der an den Kleiderbügeln hängenden Kleidungsstücke zur nächsten Bügelstation zu steuern, ist bevorzugt eine Ausbildung nach Anspruch 9 vorgesehen.

Eine besonders sichere Überführung von der Bahn in die nächste Bügelstation erhält man durch die Ausbildung nach Anspruch 10.

Die Erfindung wird im folgenden an einem Ausführungsbeispiel unter Hinweis auf die beigefügten Zeichnungen erläutert.

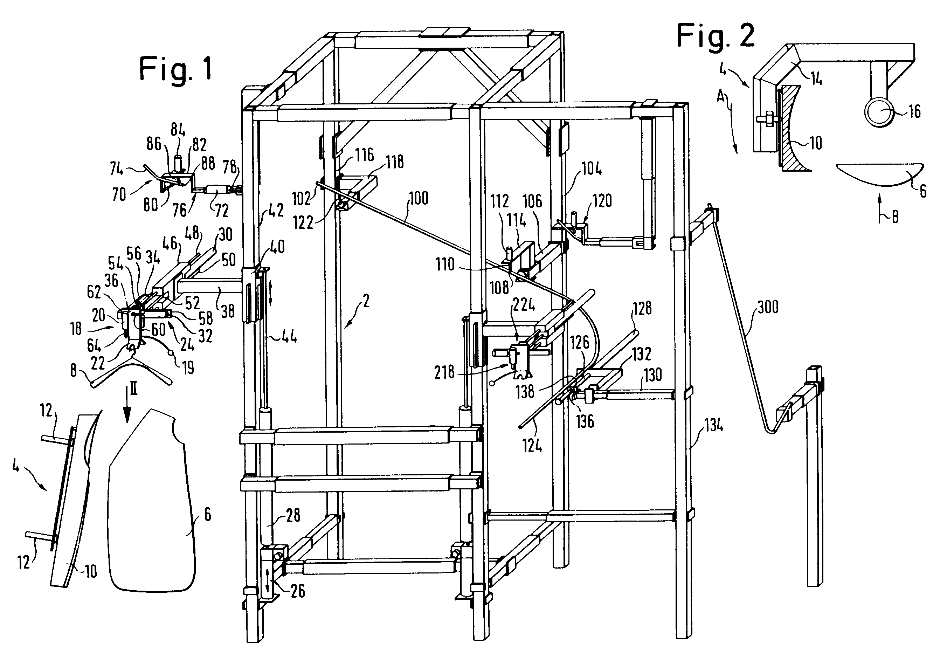

Fig. 1 zeigt den grundsätzlichen Aufbau einer erfindungsgemäßen Vorrichtung.

Fig. 2 zeigt eine Aufsicht auf eine Bügelstation in Blickrichtung II der Fig. 1.

Die Vorrichtung nach dem Ausführungsbeispiel weist ein Gerüst 2 auf, das zwischen einer ersten Bügelstation 4 und einer zweiten Bügelstation steht. Die zweite Bügelstation ist nicht näher dargestellt, da sie grundsätzlich der ersten Bügelstation 4 gleichen kann.

Die Bügelstation 4 weist eine im wesentlichen vertikal verlaufende Bügelform-Unterplatte 6 auf, an die ein Teil eines an einem Kleiderbügel 8 hängenden Kleidungsstücks durch Absenken anzulegen ist. Mit der Bügelform-Unterplatte 6 arbeitet eine Bügelform-Oberplatte 10 zusammen, die nach Anlegen des Teils des Kleidungsstücks an die Bügelform-Unterplatte 6 an das Teil zum Bügeln des Teils zu drücken ist.

Die Bügelform-Oberplatte 10 ist rückseitig mit Führungen 12 versehen, die in einem Träger 14 verstellbar zu haltern sind. Der Träger 14 ist um eine vertikale Achse 16 schwenkbar. Bekannte Einrichtungen zum Andrücken der Bügelform-Oberplatte 10 an die Bügelform-Unterplatte 6 sind nicht dargestellt. Die Schwenkrichtung der Bügelform-Oberplatte 10 ist durch den Pfeil A gekennzeichnet und die Andruckrichtung der Bügelform-Oberplatte 10 an die Bügelform-Unterplatte 6 durch den Pfeil B.

Ein Greifer 18 dient zum wahlweisen Erfassen und Freigeben eines Kleiderbügels 8. Er ist durch eine von einem pneumatischen Zylinder 20 betätigbare Klammer 22 gebildet. Der Greifer 18 befindet sich an einem Halter 24, der zwischen einer oberen Stellung und einer unteren Stellung über der Bügelform-Unterplatte 6 auf- und abbewegbar und in bezug auf die Bügelform-Unterplatte 6 ausrichtbar ist.

Die Höhenverstellung des Halters 24 erfolgt mittels zweier übereinander an dem Gestell 2 angebrachter pneumatischer Zylinder 26, 28, die in Reihe geschaltet sind. Der untere Zylinder 26 dient zur Vertikalausrichtung eines Kleidungsstücks gegenüber der Bügelform-Unterplatte 6, der große Zylinder 28 dient zum Abheben des Kleidungsstücks von der Bügelform-Unterplatte 6 nach oben bzw. zum Absenken eines Kleidungsstücks auf die Bügelform-Unterplatte 6.

Der Halter 24 ist durch einen pneumatischen Zylinder 30 quer zur Längsausdehnung des Querschnitts der Bügelform-Unterplatte 6 verstellbar und durch einen pneumatischen Zylinder 32 in Richtung der Längsausdehnung des Querschnitts der Bügelform-Unterplatte 6 verstellbar. Überdies ist er durch einen pneumatischen Zylinder 34 um eine Vertikalachse 36 verschwenkbar. Die drei letztgenannten Verstellungen erfolgen gegenüber einem Tragarm 38, der von einer Führungshülse 40 geführt längs eines Pfostens 42 des Gestells 2 von einer Kolbenstange 44 des Zylinders 28 höhenverstellbar ist. Am freien Ende des Tragarms 38 befindet sich ein Querstück 46, das von an dem Halter 24 angebrachten, parallel zu dem Zylinder 30 verlaufenden Führungsstangen 48, 50 durchsetzt ist. Eine Kolbenstange 52 des Zylinders 30 ist mit ihrem vorderen Ende an dem Halter 24 befestigt.

Aus dem Zylinder 34 ragt eine Kolbenstange 54, die an einen exzentrischen Ansatz (nicht dargestellt) der Vertikalachse 36 angreift. Der Zylinder 34 ist auf einer Platte 56 befestigt, die Teil des Halters ist.

Der Zylinder 32 ist ebenfalls auf einer Platte 58 befestigt, die Teil des Halters 24 ist. Eine aus dem Zylinder 32 ragende Kolbenstange 60 greift mit ihrem Ende an eine Trägerplatte 62 der Klammer 22 an. An dieser Trägerplatte 62 ist der Zylinder 20 befestigt. Eine aus dem Zylinder 20 nach unten herausragende Kolbenstange 64 betätigt einen (nicht dargestellten) Mechanismus zum Öffnen und Schließen der Klammer 22.

Der oberen Stellung des Halters 24 ist ein Zwischenträger 70 zur Übernahme des Kleiderbügels 8 in der oberen Stellung des Halters 24 nach Freigabe durch die Klammer 22 zugeordnet. Wesentliches Element des Zwischenträgers 70 ist eine durch einen pneumatischen Zylinder 72 verschwenkbare Stange 74, an die der Kleiderbügel 8 anzuhängen ist. Der Zylinder 72 ist an einem Arm 76 angebracht, der um eine Vertikalachse am Pfosten 42 verschwenkbar ist. Der Zylinder 72 mit einer ihm zugeordneten Kolbenstange 78 greift einerseits am Pfosten 42 und andererseits am Arm 76 an. Die Stange 74 ist über eine das Rutschen des Kleiderbügels 8 nicht behindernde Trägerstange 80 an dem Arm 76 befestigt. Oberhalb des unteren Endes der Stange 74 ist auf einen nach oben U-förmig gebogenen Abschnitt 82 des Arms 76 ein pneumatischer Zylinder 84 aufgesetzt, der eine nach unten herausragende, bis nahe an das untere Ende der Stange 74 zu führende, als verstellbarer Anschlag dienende Kolbenstange 86 aufweist.

Eine zwischen der Bügelstation 4 und der folgenden, nicht dargestellten Bügelstation abwärts verlaufende, stangenförmige Gleitführung 100 dient als Bahn zur Überführung eines ihrem oberen Ende 102 durch den Zwischenträger 70 in dessen Abgabestellung zugeführten Kleiderbügels 8 zu ihrem unteren Ende zur Übernahme durch einen dem Zwischenträger 70 entsprechenden und daher nicht näher beschriebenen Zwischenträger 120 der folgenden Bügelstationen in dessen Übernahmestellung. Die Gleitführung 100 besteht bevorzugt aus einem Rohr, dessen oberes Ende 102 in außen glatten Formschluß mit dem konisch zulaufenden Abgabeende 88 der Stange 74 des Zwischenträgers 70 zu bringen ist. Nächst der Gleitführung 100 ist an einem Pfosten 104 des Gestells 2 ein von einem Arm 106 getragener pneumatisch betätigbarer Anschlag 108 für einen Kleiderbügel 8 angeordnet. Der Anschlag 108 ist durch das Ende einer Kolbenstange 110 eines pneumatischen Zylindes 112 gebildet, der auf einem Winkelstück 114 am Arm 106 sitzt.

Nächst dem oberen Ende der Gleitführung 100 befindet sich an einem Pfosten 116 eine Stütze 118 für die Gleitführung 100, die mit einem das Herabgleiten der Kleiderbügel 8 nicht hindernden Stützstab 122 die Gleitführung 100 abstützt.

Das Abgabeende 124 der Gleitführung 100 verläuft horizontal, so daß auf der Gleitführung 100 herabgleitende Kleiderbügel auf dem Abgabeende 124 zur Ruhe kommen. Nächst dem Abgabeende ist ein in Längsrichtung dieses Abgabeendes 124 pneumatisch verstellbarer Stößel 126 zum Schieben eines zur Ruhe gekommenen Kleiderbügels in den Erfassungsbereich des Greifers 218 der folgenden Bügelstation angeordnet. Der Greifer 218 und der ihm zugeordnete Halter 224 sind mit dem ihnen zugeordneten Betätigungsgliedern ebenso ausgebildet wie der Greifer 18 und der Halter 24 und werden daher nicht näher beschrieben.

Der Stößel 126 ist durch eine Kolbenstange eines Zylinders 128 gebildet, der an einem von einem Arm 130 getragenen Winkelstück 132 sitzt. Der Arm 130 ist an einem Pfosten 134 des Gestells 2 befestigt. Am freien Ende des Arms 130 ist mit einer Stützstange 136, die das Gleiten des Kleiderbügels nicht behindert, das Abgabeende 124 der Gleitführung 100 abgestützt. Außerdem ragt aus dem freien Ende des Arms 130 ein Kontaktarm 138 eines Berührungsschalters, der die Ankunft eines Kleiderbügels meldet, so daß der Stößel 126 den Kleiderbügel in die Stellung vorschieben kann, in der er von dem Greifer 218 zu ergreifen ist.

Rechts von dem Gestell 2 ist eine Gleitführung 300 zu einer folgenden Büelstation angedeutet.

Gleichwenn die Wirkungsweise der Vorrichtung schon in Zusammenhang mit ihrer Konstruktion beschrieben worden ist, sei die Wirkungsweise - mit einigen Ergänzungen - wiederholt: Sakkos werden auf ihren Kleiderbügeln hängend an die Vorrichtung herangeführt und von dem Greifer 18 übernommen. Der Greifer 18 ist nach allen Seiten verstellbar, so daß eine korrekte Ausrichtung des Sakkos gegenüber der Bügelform-Unterplatte 6 zum Bügeln möglich ist. Nach der Ausrichtung wird der Sakko auf die Bügelform-Unterplatte 6 abgesenkt. Ist die Ausrichtung noch nicht korrekt, so kann sie durch einen Handgriff 19 korrigiert werden.

Nach dem Bügelvorgang, der nach der Ausrichtung erfolgt, wird der Sakko nach oben abgehoben und dem Zwischenträger 70 übergeben. Der Zwischenträger 70 übergibt den Sakko, der auf dem Kleiderbügel 8 hängt, der Gleitführung 100. Dort gleitet er bis zum Abgabeende 124 und wird von dort in die nächste Bügelstation übernommen. Anschließend wird er ebenso wie er in die zweite Bügelstation überführt wurde, in die dritte (nicht dargestellte) Bügelstation überführt, usf.

## Patentansprüche

1. Vorrichtung zum Bügeln von an Kleiderbügeln (8) hängenden Kleidungsstücken, insbesondere Sakkos,
**gekennzeichnet durch**
A) wenigstens zwei Bügelstationen (4) mit jeweils
a) wenigstens einer im wesentlichen vertikal verlaufenden Bügelform-Unterplatte (6), an die ein Teil eines an einem Kleiderbügel (8) hängenden Kleidungsstücks durch Absenken anzulegen ist,
b) einer mit dieser Bügelform-Unterplatte (6) zusammenarbeitenden Bügelform-Oberplatte (10), die nach Anlegen des Teils des Kleidungsstücks an die Bügelformunterplatte (6) an das Teil zum Bügeln des Teils zu drücken ist,
c) einen Greifer (18) zum wahlweisen Erfassen und Freigeben eines Kleiderbügels (8),
d) einen zwischen einer oberen Stellung und einer unteren Stellung auf- und abbewegbaren, über der Bügelform-Unterplatte (6) in bezug auf die Bügelform-Unterplatte (6) ausrichtbaren Halter (24) für den Greifer (18),
e) einen der oberen Stellung des Halters (24) zugeordneten, zwischen einer Übernahmestellung und einer Abgabestellung bewegbaren Zwischenträger (70) zur Übernahme des Kleiderbügels (8) in der oberen Stellung des Halters (24) nach Freigabe durch den Greifer (18),
B) eine zwischen wenigstens zwei Bügelstationen (4) verlaufende Bahn (100) zur Überführung eines ihrem einen Ende (102) durch den Zwischenträger (70) der einen Bügelstation (4) in dessen Abgabestellung zugeführten Kleiderbügels (8) zu ihrem anderen Ende (124) zur Übernahme durch den Greifer (218) der anderen Bügelstation.

2. Vorrichtung nach Anspruch 1, dadurch gekennzeichnet, daß sich die Bügelform-Oberplatte (10) an einem um eine vertikale Achse (16) schwenkbar gelagerten Träger (14) befindet.

3. Vorrichtung nach Anspruch 1 oder 2, dadurch gekennzeichnet, daß der Greifer (18) zum Greifen eine pneumatisch betätigbare Klammer (22) aufweist.

4. Vorrichtung nach einem der vorstehenden Ansprüche, dadurch gekennzeichnet, daß der Halter (24) vertikal getrennt mit großem und mit kleinem Hub pneumatisch verstellbar ist.

5. Vorrichtung nach einem der vorstehenden Ansprüche, dadurch gekennzeichnet, daß der Halter (24) horizontal in zwei verschiedenen Richtungen und um eine Vertikalachse (36) pneumatisch verstellbar ist.

6. Vorrichtung nach einem der vorstehenden Ansprüche, dadurch gekennzeichnet, daß der Zwischenträger (70) eine pneumatisch verschwenkbare Stange (74) zum Aufhängen eines Kleiderbügels (8) aufweist.

7. Vorrichtung nach Anspruch 6, dadurch gekennzeichnet, daß an einem pneumatisch verschwenkbaren, die Stange (74) tragenden Arm (76) ein pneumatisch betätigbarer Anschlag (86) für einen auf der Stange (74) hängenden Kleiderbügel (8) angebracht ist.

8. Vorrichtung nach Anspruch 6 oder 7, dadurch gekennzeichnet, daß die Bahn (100) durch eine stangenförmige, abwärts verlaufende Gleitführung (100) für den Kleiderbügel (8) gebildet ist, deren Aufnahmeende (102) in außen glatten Formschluß mit dem Abgabeende (88) der Stange (74) des Zwischenträgers (70) zu bringen ist.

9. Vorrichtung nach einem der vorstehenden Ansprüche, dadurch gekennzeichnet, daß nächst der Bahn (100) ein pneumatisch betätigbarer Anschlag (108) für einen Kleiderbügel (8) angeordnet ist.

10. Vorrichtung nach einem der vorstehenden Ansprüche, dadurch gekennzeichnet, daß das Abgabeende (124) der Bahn (100) horizontal verläuft und daß nächst dem Abgabeende (124) der Bahn (100) ein in Längsrichtung dieses Abgabeendes (124) pneumatisch verstellbarer Stößel (126) zum Schieben des Kleiderbügels (8) in den Erfassungsbereich des Greifers (218) der zweiten Bügelstation angeordnet ist.

## Claims

1. A device for pressing garments, more particularly jackets, hanging on coathangers (8), characterised by
A) at least two pressing stations (4) each having
a) at least one substantially vertical under-plate (6) shaped for pressing on to which a part of a garment hanging on a coathanger (8) is to be lowered,
b) an over-plate (10) shaped for pressing cooperating with said under-plate (6), said over-plate being adapted to be pressed against the part of the garment to be pressed once the garment has been placed on the under-plate
c) a gripping device (18) for selectively gripping and releasing a coathanger (8),
d) a bracket (24) for the gripping device (18), which may be moved upwards and downwards between an upper position and a lower position and which can be aligned above the under-plate (6),
e) an intermediate carrier (70) for receiving the coathanger (8) in the upper position of the bracket (24) after release by the gripping device (18), said intermediate carrier being associated with the upper position of the bracket (24) and movable between a receiving position and a delivery position,
B) a track (100) running between at least two pressing stations (4) for transferring a coathanger (8), delivered to one of its ends (102) by the intermediate carrier (70) of one pressing station (4) in the delivery position thereof, to the other end (124) in order to be received by the gripping device (218) of the other pressing station.

2. A device according to claim 1, characterised in that the over-plate (10) is disposed on a carrier (14) pivotally mounted about a vertical axis (16).

3. A device according to claim 1 or 2, characterised in that the gripping device (18) has a pneumatically operable clamp (22) for gripping.

4. A device according to one of the preceding claims, characterised in that the bracket (24) is vertically independently adjustable pneumatically with a large or a small stroke.

5. A device according to one of the preceding claims, characterised in that the bracket (24) is horizontally adjustable pneumatically, in two different directions and about a vertical axis.

6. A device according to one of the preceding claims, characterised in that the intermediate carrier (70) has a pneumatically displaceable rod (74) for the suspension of a coathanger (8).

7. A device according to claim 6, characterised in that a pneumatically operable stop (86) for a coathanger (8) hanging on the rod (74) is provided on an arm (76) which carries the rod (74) and is displaceable pneumatically.

8. A device according to claim 6 or 7, characterised in that the track (100) is in the form of a rod-like, downwardly extending sliding guide (100) for the coathanger (8), the receiving end (102) of which guide is to be brought into outwardly smooth interlocking engagement with the delivery end (88) of the rod (74) of the intermediate carrier (70).

9. A device according to one of the preceding claims, characterised in that a pneumatically operable stop (108) for a coathanger (8) is arranged adjacent to the track (100).

10. A device according to one of the preceding claims, characterised in that the delivery end (124) of the track (100) extends horizontally and in that there is, adjacent to the delivery end (124) of the track (100), a striker (126) which is displaceable pneumatically in the longitudinal direction of said delivery end (124) in order to push the coathanger (8) into the gripping region of the gripping device (218) of the second pressing station.

## Revendications

1. Dispositif pour repasser des pièces de vêtement suspendues à des cintres (8), notamment des vestons, caractérisé par:
A) au moins deux postes de repassage (4) comprenant chacun
a) au moins une plaque de repassage inférieure (6) orientée sensiblement verticalement, sur laquelle est appliquée une partie d'une pièce de vêtement suspendu à un cintre (8), par abaissement;
b) une plaque de repassage supérieure (10) coopérant avec cette plaque de repassage inférieure (6), la plaque (10) étant pressée sur la partie à repasser de la pièce après application de la partie de la pièce de vêtement sur la plaque de repassage inférieure (6),
c) un dispositif de prise (18) pour saisir et libérer à volonté un cintre (8),
d) un support (24) destiné au dispositif de prise (18), pouvant être soulevé et abaissé entre une position supérieure et une position inférieure et orienté au-dessus de la plaque de repassage inférieure (6) par rapport à cette dernière,
e) un support intermédiaire (70) associé à la position supérieure du support (24), pouvant être déplacé entre une position de réception et une position de transfert en vue de la transmission du cintre (8) dans la position supérieure du support (24) après libération par le dispositif de prise (18),
B) une piste (100) disposée entre au moins deux postes de repassage (4) pour transférer un cintre (8) avancé sur l'une de ses extrémités (102) par le support intermédiaire (70) d'un poste de repassage (4) dans sa position de transfert vers son autre extrémité (124) en vue d'être repris par un dispositif de prise (218) de l'autre poste de repassage.

2. Dispositif selon la revendication 1, caractérisé en ce que la plaque de repassage supérieure (10) est prévue sur un support (14) monté de façon pivotante autour d'un axe vertical (16).

3. Dispositif selon la revendication 1 ou 2, caractérisé en ce que le dispositif de prise (18) comprend pour la saisie une pince (22) à commande pneumatique.

4. Dispositif selon l'une quelconque des revendications précédentes, caractérisé en ce que le support (24) peut être déplacé pneumatiquement en direction verticale selon une course qui est séparée en une course de grande longueur et en une course de courte longueur.

5. Dispositif selon l'une quelconque des revendications précédentes, caractérisé en ce que le support (24) peut être déplacé pneumatiquement horizontalement dans deux directions différentes autour d'un axe vertical (36).

6. Dispositif selon l'une quelconque des revendications précédentes, caractérisé en ce que le support intermédiaire (70) comprend une tige (74) pouvant être pivotée pneumatiquement et destinée à la suspension d'un cintre (8).

7. Dispositif selon la revendication 6, caractérisé en ce qu'une butée à commande pneumatique (86) destinée à un cintre (8) suspendu sur la tige (74) est montée sur un bras (76) pouvant être pivoté pneumatiquement et supportant la tige (74).

8. Dispositif selon la revendication 6 ou 7, caractérisé en ce que la piste (100) est constituée par une glissière de guidage (100) destinée aux cintres (8), en forme de tige et orientée vers le bas, dont l'extrémité de réception (102) est amenée par concordance de formes et lisse à l'extérieur avec l'extrémité de transfert (88) de la tige (74) du support intermédiaire (70).

9. Dispositif selon l'une quelconque des revendications précédentes, caractérisé en ce qu'une butée à commande pneumatique (108) destinée à un cintre (8) est disposée à proximité de la piste (100).

10. Dispositif selon l'une quelconque des revendications précédentes, caractérisé en ce que l'extrémité de transfert (124) de la piste (100) est horizontale et en ce qu'à proximité de l'extrémité de transfert (124) de la piste (100) est disposé un poussoir (126) pouvant être déplacé pneumatiquement en direction longitudinale de cette extrémité de transfert pour déplacer le cintre (8) et l'amener dans la région de saisie du dispositif de prise (218) du second poste de repassage.
